# EUROPEAN PATENT APPLICATION

(11) **EP 2 772 835 A1**
(43) Date of publication of application: **03.09.2014**
(21) Application number: 13157040.0
(22) Date of filing: 27.02.2013
(51) Int. Cl.: G06F 3/041, G02F 1/1335, G02B 1/10, G06F 3/044

(54) **Touch-sensitive panel**

(71) Applicant: Wintek (China) Technology Ltd., Dongguan City 523000 (CN); Wintek Corporation, 42760 Taichung City (TW)
(72) Inventor: Lien, Chih-Hsien, 420 Taichung City (TW); Lin, Su-Ming, 427 Taichung City (TW); Huang, Shin-Chieh, 404 Taichung City (TW); Chen, Chia-Chi, 411 Taichung City (TW); Tsai, Yi-Chen, 436 Taichung City (TW); Yu, Peng-Chih, 880 Penghu County (TW); Huang, Ping-Wen, 406 Taichung City (TW)
(74) Representative: Von Kreisler Selting Werner - Partnerschaft von Patentanwälten und Rechtsanwälten mbB

(57) **Abstract**

A touch-sensitive panel including a substrate, a plurality of sensing electrodes and a decoration layer is disclosed. The substrate has a touch-sensitive region and a decoration region around the touch-sensitive region. A portion of the decoration region is a semi-transparent region. The sensing electrodes are disposed on the touch-sensitive region and interlaced to each other. The decoration layer is disposed on the decoration region. The decoration layer has a meshed pattern in the semi-transparent region. The meshed pattern has a plurality of non-transparent mesh dots. The area ratio of the non-transparent mesh dots in the semi-transparent region is used to regulate the light transmittance of the semi-transparent region. In another embodiment, the meshed pattern has a plurality of transparent mesh holes. The area ratio of the transparent holes in the semi-transparent region is used to regulate the light transmittance of the semi-transparent region.

## Description

### BACKGROUND OF THE INVENTION

### Field of the Invention

The invention relates in general to a touch-sensitive panel, and more particularly to a touch-sensitive panel which achieves semi-transparent visual effect or color-gradient effect through the meshed pattern in the semi-transparent region.

### Description of the Related Art

The touch-sensitive panel has gained a considerable market share in the consumer electronic products since the technology of touch-sensitive panel was developed. Currently, touch display panels integrating the functions of touch control and display are widely used in portable electronic products such as wireless communication mobile phones, notebook computers, tablet computers and digital cameras etc.

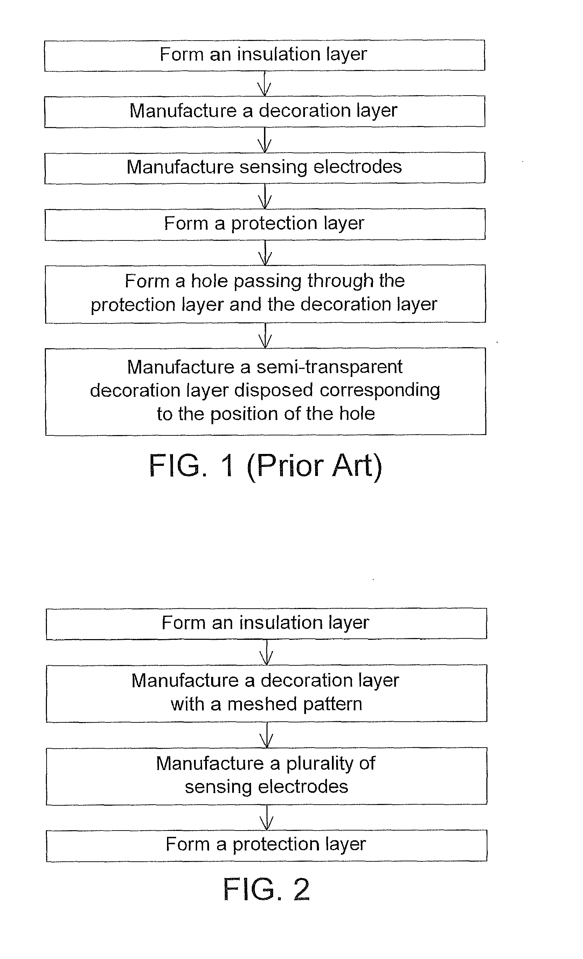

Referring to FIG. 1, a flowchart of forming a semi-transparent region in a decoration layer of a non-display region of a conventional touch-sensitive panel is shown. The conventional touch-sensitive panel is manufactured according to the following steps. First, an insulation layer made of silicon dioxides is formed on a substrate. Next, a decoration layer on the non-display region is manufactured. Then, a plurality of sensing electrodes interlaced to each other is formed for sensing a corresponding coordinate position of a touch signal. Then, a protection layer made of silicon dioxides is formed on the sensing electrodes and the decoration layer. Then, a hole passing through the protection layer and the decoration layer is formed to expose a transparent region. Lastly, a semi-transparent decoration layer is manufactured correspondingly on the position of the hole to form a semi-transparent region. However, the conventional method requires performing the ink printing processes twice, not only increasing extra steps in the manufacturing process but also incurring more manufacturing cost for the printing screens. Besides, the light transmittance of the conventional semi-transparent decoration layer is regulated by adding a transparent ink to an ordinary ink, the parameters and printing uniformity of the transparent ink must be accurately adjusted otherwise the printing quality of the semi-transparent decoration layer in printing process every time cannot be consistent.

### SUMMARY OF THE INVENTION

The invention is directed to a touch-sensitive panel which achieves semi-transparent visual effect or color-gradient effect through the meshed pattern in the semi-transparent region. Since transparent mesh holes or non-transparent mesh dots arranged in regular can be used to regulate aperture area of the meshed pattern, the light transmittance of the semi-transparent region also can be regulated accordingly.

According to an embodiment of the present invention, a touch-sensitive panel including a substrate, a plurality of sensing electrodes and a decoration layer is disclosed. The substrate has a touch-sensitive region and a decoration region around the touch-sensitive region. A portion of the decoration region is a semi-transparent region. The sensing electrodes are disposed on the touch-sensitive region and interlaced to each other. The decoration layer is disposed on the decoration region. The decoration layer has a meshed pattern in the semi-transparent region. In the semi-transparent region, the meshed pattern has a plurality of non-transparent mesh dots. The area ratio of the non-transparent dots in the semi-transparent region is used to regulate the light transmittance of the semi-transparent region. The area ratio of the non-transparent mesh dots in the semi-transparent region is inversely proportional to the light transmittance.

According to another embodiment of the present invention, a touch-sensitive panel including a substrate, a plurality of sensing electrodes and a decoration layer is disclosed. The substrate has a touch-sensitive region and a decoration region around the touch-sensitive region. A portion of the decoration region is a semi-transparent region. The sensing electrodes are disposed on the touch-sensitive region and interlaced to each other. The decoration layer is disposed on the decoration region. The decoration layer has a meshed pattern in the semi-transparent region. In the semi-transparent region, the meshed pattern has a plurality of transparent mesh holes. The area ratio of the transparent mesh holes in the semi-transparent region is used to regulate the light transmittance of the semi-transparent region. The area ratio of the transparent mesh holes in the semi-transparent region is proportional to the light transmittance.

According to an embodiment of the present invention, a touch-sensitive panel including a touch-sensitive region and a decoration region is disclosed. The touch-sensitive region provides a plurality of sensing electrodes. The decoration region around the touch-sensitive region, wherein a portion of the decoration region is a semi-transparent region. The semi-transparent region is formed by a meshed pattern in which a plurality of mesh dots of the meshed pattern is formed. An area ratio of the mesh dots in the semi-transparent region is used to regulate a light transmittance of the semi-transparent region, and the area ratio of the mesh dots in the semi-transparent region is related to the light transmittance.

According to an embodiment of the present invention, a touch-sensitive panel including a touch-sensitive region and a decoration region is disclosed. The touch-sensitive region provides a plurality of sensing electrodes. The decoration region around the touch-sensitive region, wherein a portion of the decoration region is a semi-transparent region. The semi-transparent region is formed by a meshed pattern in which a plurality of mesh holes of the meshed pattern is formed. An area ratio of the mesh holes in the semi-transparent region is used to regulate a light transmittance of the semi-transparent region, and the area ratio of the mesh holes in the semi-transparent region is related to the light transmittance.

The above and other aspects of the invention will become better understood with regard to the following detailed description of the preferred but non-limiting embodiment(s). The following description is made with reference to the accompanying drawings.

### BRIEF DESCRIPTION OF THE DRAWINGS

FIG. 1 shows a flowchart of forming a semi-transparent region in a decoration layer of a non-display region of a conventional touch-sensitive panel;

FIG. 2 shows a flowchart of forming a semi-transparent region in a decoration layer of a non-display region of a touch-sensitive panel according to an embodiment of the invention;

FIG. 3 shows a schematic diagram of a touch-sensitive panel having a semi-transparent region in the decoration region according to an embodiment of the invention;

FIG. 4A shows a cross-sectional view of a touch-sensitive panel and an enlarged view of a semi-transparent region according to an embodiment of the invention;

FIG. 4B shows a cross-sectional view of a touch-sensitive panel and an enlarged view of a semi-transparent region according to an embodiment of the invention;

FIG. 5 shows a measurement chart of the proportional relationship between the aperture area ratio and the light transmittance;

FIG. 6 shows a cross-sectional view of a touch-sensitive panel according to an embodiment of the invention;

FIG. 7 shows a schematic diagram of a meshed pattern according to an embodiment of the invention; and

FIG. 8 shows a schematic diagram of a meshed pattern according to another embodiment of the invention.

### DETAILED DESCRIPTION OF THE INVENTION

Referring to FIG. 2, a flowchart of forming a semi-transparent region in a decoration layer of a non-display region of a touch-sensitive panel according to an embodiment of the invention is shown. First, an insulation layer made of silicon dioxides is formed on the substrate. Next, the step of manufacturing a decoration layer is conducted. In the step, a decoration layer (such as a photoresist formed by coating process) is formed on the insulation layer and forms a meshed pattern in the semi-transparent region by way of exposing and developing. Then, a plurality of sensing electrodes interlaced to each other is formed for sensing a corresponding coordinate position of a touch signal. Then, a protection layer made of silicon dioxides is formed on the sensing electrodes and the decoration layer. The conventional method of manufacturing a decoration layer requires two processes of ink printing. In the present embodiment, the transmittance of the light entering the semi-transparent region is regulated by the decoration layer with a meshed pattern, not only simplifying the manufacturing processes and reducing the manufacturing cost of printing screen, but also accurately adjusting the parameters and printing uniformity of the ink to avoid inconsistency of printing in quality.

A number of embodiments are disclosed below for elaborating the invention. However, the embodiments of the invention are for detailed descriptions only, not for limiting the scope of protection of the invention.

### First Embodiment

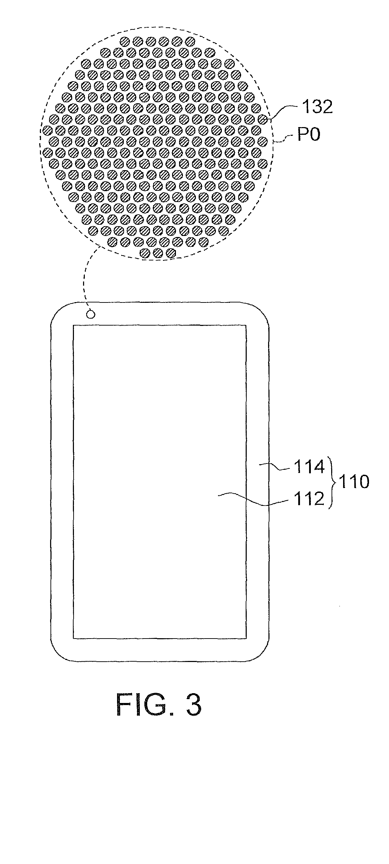

Referring to FIG. 3, a schematic diagram of a touch-sensitive panel having a semi-transparent region in the decoration region according to an embodiment of the invention is shown. The decoration region 114 is around a touch-sensitive region 112, and a portion of the decoration region 114 is a semi-transparent region P0. In the semi-transparent region P0, the light transmittance may be calculated according to the area ratio of the meshed pattern in the semi-transparent region P0.

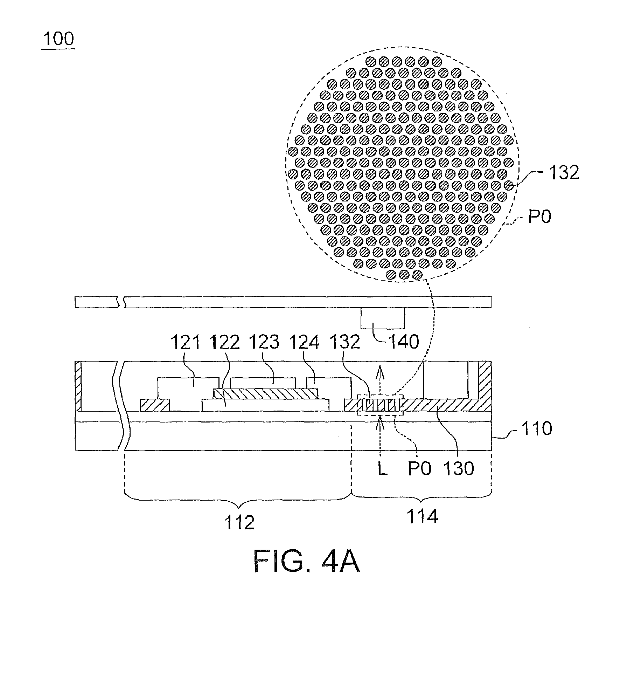

Referring to FIG. 4A, a cross-sectional view of a touch-sensitive panel and an enlarged view of a semi-transparent region according to an embodiment of the invention are shown. The touch-sensitive panel 100 includes a substrate 110, a plurality of sensing electrodes 121∼124 and a decoration layer 130. The substrate 110 has a touch-sensitive region 112 and a decoration region 114. The sensing electrodes 121∼124 are disposed on the touch-sensitive region 112 and interlaced to each other for sensing a coordinate position corresponding to a touch signal. The decoration layer 130 is disposed around the touch-sensitive region 112, that is, on the decoration region 114. The decoration layer 130 has a meshed pattern in the semi-transparent region P0. The meshed pattern is formed by a plurality of non-transparent mesh dots 132. In the semi-transparent region P0, the portion other than the non-transparent dots 132 is a transparent region. The area ratio of the non-transparent dots 132 in the semi-transparent region P0 can be regulated to change the transmittance of the light L entering the semi-transparent region P0. That is, the area ratio of the mesh dots 132 in the semi-transparent region P0 is related to the light transmittance.

The decoration layer 130 is formed by a non-transparent material having a background color, and is most commonly formed by a color photoresist. The non-transparent mesh dots 132 are formed in the meshed pattern by way of exposing and developing, and only one mask would suffice to achieve semi-transparent visual effect or color-gradient effect. As indicated in the enlarged view of FIG. 4A, the non-transparent mesh dots 132 are arranged in a regular manner, so the transparent region of the semi-transparent region P0 can be regulated through the non-transparent mesh dots 132 arranged in a regular manner. The larger the area of the non-transparent mesh dots 132 in the semi-transparent region P0 is, the fewer the light L may penetrate, and the smaller the light transmittance is. Conversely, the smaller the area of the non-transparent mesh dots 132 in the semi-transparent region P0 is, the more the light L may penetrate, and the larger the light transmittance is. Thus, the area ratio of the non-transparent mesh dots 132 in the semi-transparent region P0 is inversely proportional to the light transmittance.

As indicated in FIG. 4A, the touch-sensitive panel 100 further includes a photo-sensor 140 located at the rear of the semi-transparent region P0 for detecting the luminous flux entering the semi-transparent region P0. For example, there will be more luminous flux entering the semi-transparent region P0 at sunny places and lesser luminous flux entering the semi-transparent region P0 at gloomy places. Thus, the touch-sensitive panel 100 may adjust the brightness of the touch screen with the luminous flux measured by the photo-sensor 140, hence avoiding the influence of sunshine on the touch screen.

### Second Embodiment

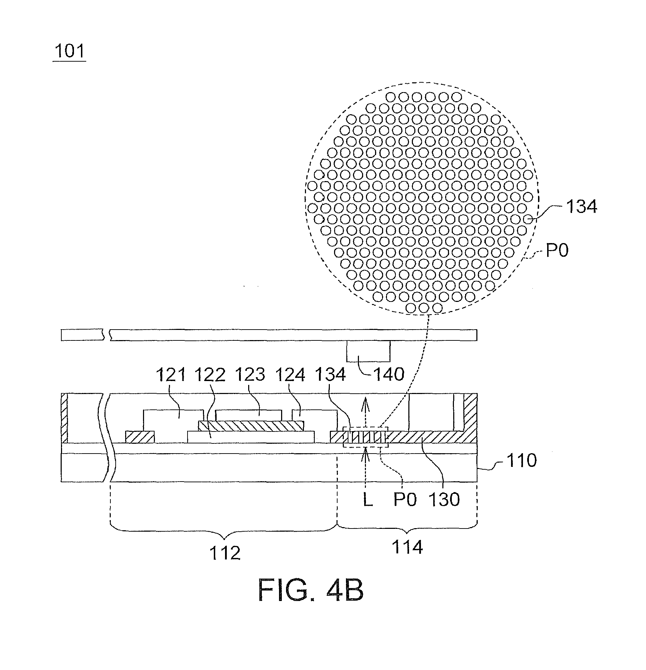

Referring to FIG. 4B, a cross-sectional view of a touch-sensitive panel and an enlarged view of a semi-transparent region according to an embodiment of the invention are shown. The second embodiment is different from the first embodiment in that, the meshed pattern is formed by a plurality of transparent mesh holes 134. That is, in the semi-transparent region P0, the portion other than the transparent mesh holes 134 is non-transparent. The area ratio of the mesh holes 134 in the semi-transparent region P0 is used to regulate a light transmittance of the semi-transparent region P0. That is, the area ratio of the mesh dots 134 in the semi-transparent region P0 is related to the light transmittance. The transparent mesh holes 134 are arranged in a regular manner, so the transparent region of the semi-transparent region P0 may be adjusted with the transparent holes 134 arranged in a regular manner. The larger the aperture area of the meshed pattern is, the larger the light L may penetrate. In other words, the aperture area of the meshed pattern is proportional to the light transmittance.

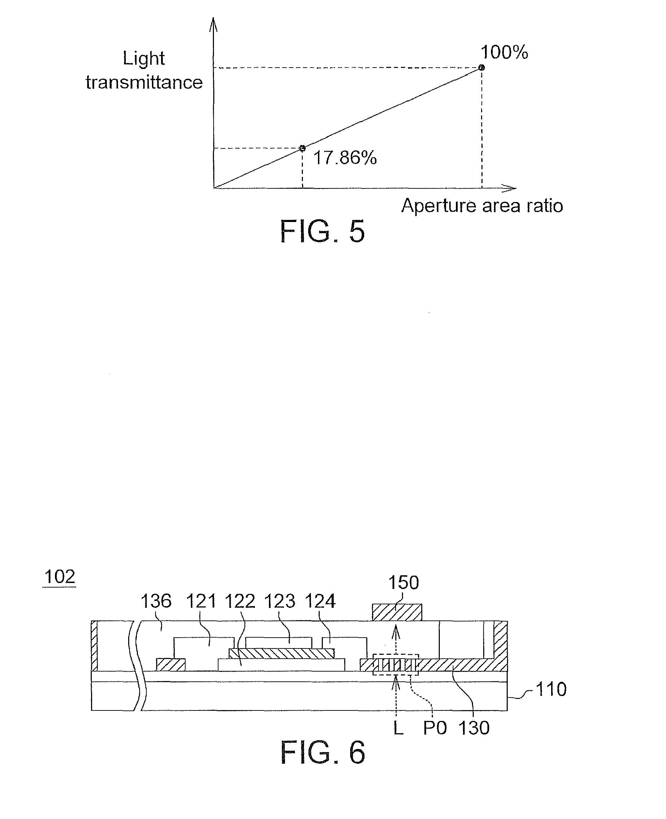

Referring to FIG. 5, a measurement chart of the proportional relationship between the aperture area ratio and the light transmittance is shown. The aperture area of the semi-transparent region P0 is basically linearly proportional to the light transmittance. Therefore, when calculating the light transmittance, the light transmittance may be expressed by a ratio of the aperture area in the semi-transparent region P0. The aperture area ratio is defined as the total area of the transparent region (such as the transparent mesh holes 134 of the second embodiment) in the semi-transparent region divided by the area of the semi-transparent region P0.

### Third Embodiment

Referring to FIG. 6, a cross-sectional view of a touch-sensitive panel 102 according to an embodiment of the invention is shown. The touch-sensitive panel 102 includes a protection layer 136 covering the detecting electrodes 121∼124 and the decoration layer 130. The present embodiment is different from the first and the second embodiments in that: the touch-sensitive panel 102 further includes a color ink 150 disposed on the protection layer 136 and located at the rear of the semi-transparent region P0 for reflecting the light L entering through the semi-transparent region P0. The color of the color ink 150 is not restrictive but preferably is different from the color of the decoration layer 130 having a ground color material, such that the color displayed in the semi-transparent region P0 is different from the color of the decoration layer 130. The color ink 150 may have one, two or three colors, and may even have color-gradient design, such that the color ink 150 being radiated by the light L may produce stereoscopic effect. In addition, the color ink 150 may produce various patterns, such as texts, trade mark or company names, through printing to highlight the texture quality and uniqueness.

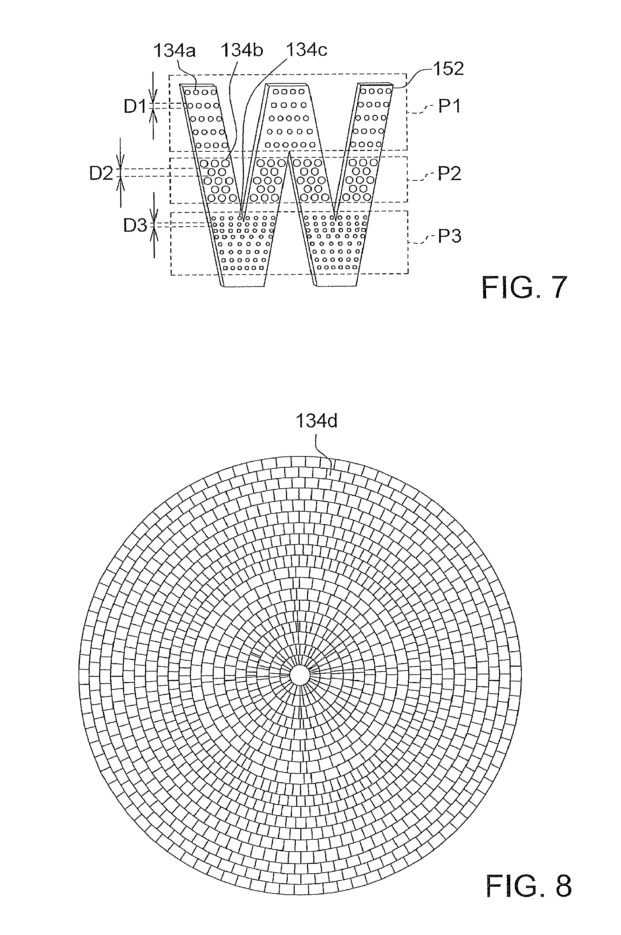

In the present embodiment of the invention, the meshed pattern is designed with different degrees of transmittance to make the color ink produce stereoscopic effect when radiated by the light L. Referring to FIG. 7, a schematic diagram of a meshed pattern according to an embodiment of the invention is shown. The meshed pattern is formed by three types of transparent mesh holes 134a∼134c with three different transmittance in an embodiment. In another embodiment, the meshed pattern may be formed by three types of non-transparent mesh dots with three different light shading degrees, and corresponding drawings are not illustrated here. As indicated in FIG. 7, the meshed pattern includes a first pattern region P1, a second pattern region P2 and a third pattern region P3 arranged in sequence. The first pattern region P1 has a transparent hole 134a with a first dimension D1, for example. The second pattern region P2 has a transparent hole 134b with a second dimension D2, for example. The third pattern region P3 has a transparent hole 134c with a third dimension D3, for example. For instance, the second dimension D2 is greater than the first dimension D1, and the first dimension D1 is greater than the third dimension D3, that is, D2>D1>D3. In the present embodiment, the amount of light transmission can be adjusted through the transparent holes 134a∼134c with different dimensions to provide the meshed pattern with different degrees of transmittance ranging between 40∼90%. Meanwhile, the color ink 152 located at the rear of different pattern regions will produce visual disparity to produce stereoscopic effect when radiated by the light.

Referring to FIG. 8, a schematic diagram of a meshed pattern according to another embodiment of the invention is shown. Apart from the transparent mesh holes 134 and non-transparent mesh dots 132 arranged in a regular manner disclosed in the above embodiments, the meshed pattern may have a plurality of transparent mesh holes 134d arranged in the form of concentric circles in an embodiment. In another embodiment, the meshed pattern may have a plurality of non-transparent mesh dots arranged in the form of concentric circles, and associated drawings are not illustrated here. As indicated in FIG. 8, the meshed pattern has rounded edges, so that the density of transparent mesh holes 134d per unit is increased and the roughness in brim curves is improved.

According to the touch-sensitive panel disclosed in the above embodiments of the invention, the semi-transparent visual effect or color-gradient effect is achieved through the meshed pattern in the semi-transparent region. The aperture area of the meshed pattern can be regulated through the regular transparent holes or non-transparent dots , so that the transmittance of light entering the semi-transparent region can be regulated accordingly.

While the invention has been described by way of example and in terms of the preferred embodiment(s), it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A touch-sensitive panel, comprising:
a substrate having a touch-sensitive region and a decoration region around the touch-sensitive region, wherein a portion of the decoration region is a semi-transparent region;
a plurality of sensing electrodes disposed on the touch-sensitive region and interlaced to each other; and
a decoration layer disposed on the decoration region, wherein the decoration layer has a meshed pattern in the semi-transparent region in which a plurality of non-transparent mesh dots of the meshed pattern are formed, an area ratio of the non-transparent mesh dots in the semi-transparent region is used to regulate a light transmittance of the semi-transparent region, and the area ratio of the non-transparent mesh dots in the semi-transparent region is inversely proportional to the light transmittance.

2. The touch-sensitive panel according to claim 1, wherein the decoration layer is a photoresist layer.

3. The touch-sensitive panel according to claim 1, further comprising a photo-sensor located at a rear of the semi-transparent region for detecting a luminous flux of light entering the semi-transparent region.

4. The touch-sensitive panel according to claim 1, further comprising a protection layer covering the sensing electrodes and the decoration layer.

5. The touch-sensitive panel according to claim 1, further comprising a color ink disposed on the protection layer and at a rear of the semi-transparent region for reflecting a light entering through the semi-transparent region.

6. The touch-sensitive panel according to claim 1, wherein the meshed pattern comprises a plurality of pattern regions in which the non-transparent mesh dots with different light shading degrees are formed.

7. The touch-sensitive panel according to claim 1, wherein the non-transparent mesh dots are arranged in the meshed pattern in the form of concentric circles.

8. A touch-sensitive panel, comprising:
a substrate having a touch-sensitive region and a decoration region around the touch-sensitive region, wherein a portion of the decoration region is a semi-transparent region;
a plurality of sensing electrodes disposed on the touch-sensitive region and interlaced to each other; and
a decoration layer disposed on the decoration region, wherein the decoration layer has a meshed pattern in the semi-transparent region in which a plurality of transparent mesh holes of the meshed pattern is formed, an area ratio of the transparent mesh holes in the semi-transparent region is used to regulate a light transmittance of the semi-transparent region, and the area ratio of the transparent holes in the semi-transparent region is proportional to the light transmittance.

9. The touch-sensitive panel according to claim 8, wherein the decoration layer is a photoresist layer.

10. The touch-sensitive panel according to claim 8, further comprising a photo-sensor located at a rear of the semi-transparent region for detecting a luminous flux of a light entering through the semi-transparent region.

11. The touch-sensitive panel according to claim 8, further comprising a protection layer covering the sensing electrodes and the decoration layer.

12. The touch-sensitive panel according to claim 8, further comprising a color ink disposed on the protection layer and located at a rear of the semi-transparent region for reflecting a light entering through the semi-transparent region.

13. The touch-sensitive panel according to claim 8, wherein the meshed pattern comprises a plurality of pattern regions in which the transparent holes with different light transmittance are formed.

14. The touch-sensitive panel according to claim 8, wherein the transparent mesh holes are arranged in the meshed pattern in the form of concentric circles.

15. A touch-sensitive panel, comprising:
a touch-sensitive region providing a plurality of sensing electrodes; and
a decoration region around the touch-sensitive region, wherein a portion of the decoration region is a semi-transparent region; and
wherein the semi-transparent region is formed by a meshed pattern in which a plurality of mesh dots of the meshed pattern are formed, an area ratio of the mesh dots in the semi-transparent region is used to regulate a light transmittance of the semi-transparent region, and the area ratio of the mesh dots in the semi-transparent region is related to the light transmittance.

16. A touch-sensitive panel, comprising:
a touch-sensitive region providing a plurality of sensing electrodes; and
a decoration region around the touch-sensitive region, wherein a portion of the decoration region is a semi-transparent region; and
wherein the semi-transparent region is formed by a meshed pattern in which a plurality of mesh holes of the meshed pattern are formed, an area ratio of the mesh holes in the semi-transparent region is used to regulate a light transmittance of the semi-transparent region, and the area ratio of the mesh holes in the semi-transparent region is related to the light transmittance.

## Amended claims

### Amended claims in accordance with Rule 137(2) EPC.

**1.** A touch-sensitive panel (100), comprising:
a substrate (110) having a touch-sensitive region (112) and a decoration region (114) around the touch-sensitive region, wherein a portion of the decoration region (114) is a semi-transparent region (P0);
a plurality of sensing electrodes (121 - 124) disposed on the touch-sensitive region (112) and interlaced to each other; and
a decoration layer (130) disposed on the decoration region (114), wherein the decoration layer (130) has a meshed pattern in the semi-transparent region (P0) in which a plurality of non-transparent mesh dots (132) of the meshed pattern are formed, an area ratio of the non-transparent mesh dots (132) in the semi-transparent region (P0) is used to regulate a light transmittance of the semi-transparent region (P0), and the area ratio of the non-transparent mesh dots (132) in the semi-transparent region (P0) is inversely proportional to the light transmittance, wherein the meshed pattern is not overlapped with the sensing electrodes (121 - 124).

**2.** The touch-sensitive panel (100) according to claim 1, wherein the decoration layer (130) is a photoresist layer.

**3.** The touch-sensitive panel (100) according to claim 1, further comprising a photosensor located at a position corresponding to the semi-transparent region (P0) for detecting a luminous flux of light entering the semi-transparent region.

**4.** The touch-sensitive panel (100) according to claim 1, further comprising a protection layer covering the sensing electrodes and the decoration layer.

**5.** The touch-sensitive panel (100) according to claim 4, further comprising a color ink disposed on the protection layer (136) and at a position corresponding to the semi-transparent region (P0) for reflecting a light entering through the semi-transparent region.

**6.** The touch-sensitive panel (100) according to claim 1, wherein the meshed pattern comprises a plurality of pattern regions in which the non-transparent mesh dots (132) with different light shading degrees are formed.

**7.** The touch-sensitive panel (100) according to claim 1, wherein the non-transparent mesh dots (132) are arranged in the meshed pattern in the form of concentric circles.

**8.** A touch-sensitive panel (101), comprising:
a substrate (110) having a touch-sensitive region (113) and a decoration region (114) around the touch-sensitive region, wherein a portion of the decoration region (114) is a semi-transparent region (P0);
a plurality of sensing electrodes (121 - 124) disposed on the touch-sensitive region (112) and interlaced to each other; and
a decoration layer (130) disposed on the decoration region (P0), wherein the decoration layer has a meshed pattern in the semi-transparent region in which a plurality of transparent mesh holes (134) of the meshed pattern is formed, an area ratio of the transparent mesh holes (134) in the semi-transparent region (P0) is used to regulate a light transmittance of the semi-transparent region (P0), and the area ratio of the transparent holes (134) in the semi-transparent region is proportional to the light transmittance, wherein the meshed pattern is not overlapped with the sensing electrodes (121 - 124).

**9.** The touch-sensitive panel (101) according to claim 8, wherein the decoration layer is a photoresist layer.

**10.** The touch-sensitive panel (101) according to claim 8, further comprising a photosensor located at a position corresponding to the semi-transparent region for detecting a luminous flux of a light entering through the semi-transparent region.

**11.** The touch-sensitive panel (101) according to claim 8, further comprising a protection layer covering the sensing electrodes and the decoration layer.

**12.** The touch-sensitive panel (101) according to claim 11, further comprising a color ink disposed on the protection layer (136) and located at a position corresponding to the semi-transparent region for reflecting a light entering through the semi-transparent region.

**13.** The touch-sensitive panel (101) according to claim 8, wherein the meshed pattern comprises a plurality of pattern regions in which the transparent holes (134) with different light transmittance are formed.

**14.** The touch-sensitive panel (101) according to claim 8, wherein the transparent mesh holes (134) are arranged in the meshed pattern in the form of concentric circles.

**15.** A touch-sensitive panel (100), comprising:
a touch-sensitive region (112) providing a plurality of sensing electrodes (121 - 124); and
a decoration region (114) around the touch-sensitive region (112), wherein a portion of the decoration region (114) is a semi-transparent region (P0); and
wherein the semi-transparent region (P0) is formed by a meshed pattern in which a plurality of mesh dots (132) of the meshed pattern are formed, an area ratio of the mesh dots (132) in the semi-transparent region (P0) is used to regulate a light transmittance of the semi-transparent region, and the area ratio of the mesh dots (132) in the semi-transparent region (P0) is related to the light transmittance, wherein the meshed pattern is not overlapped with the sensing electrode.

**16.** A touch-sensitive panel (101), comprising:
a touch-sensitive region (112) providing a plurality of sensing electrodes (121 - 124); and
a decoration region (114) around the touch-sensitive region (112), wherein a portion of the decoration region (114) is a semi-transparent region (P0); and
wherein the semi-transparent region (P0) is formed by a meshed pattern in which a plurality of mesh holes (134) of the meshed pattern are formed, an area ratio of the mesh holes (134) in the semi-transparent region (P0) is used to regulate a light transmittance of the semi-transparent region (P0), and the area ratio of the mesh holes (134) in the semi-transparent region is related to the light transmittance, wherein the meshed pattern is not overlapped with the sensing electrode.
